# EUROPÄISCHE PATENTSCHRIFT

(11) **EP 0 855 262 B1**
(45) Veröffentlichungstag und Bekanntmachung des Hinweises auf die Patenterteilung: **04.06.2003**
(21) Anmeldenummer: 98100656.2
(22) Anmeldetag: 16.01.1998
(51) Int. Cl.: B29C 47/08, B29C 47/68

(54) **Verfahren und Vorrichtung zum Abdichten eines Ringspaltes zwischen zwei Dichtflächen von Maschinenteilen, insbesondere an Extrusionsmaschinen**
Method and apparatus for sealing an annular gap between two sealing surfaces, especially for extruders
Procédé et appareil d'étanchéification pour l'interstice annuliare entre deux surfaces d'étanchéité annulaires, notamment pour de machines à extruder

(30) Priorität: 27.01.1997 DE 19702806
(43) Veröffentlichungstag der Anmeldung: 29.07.1998
(73) Patentinhaber: Paul Troester Maschinenfabrik, D-30519 Hannover (DE)
(72) Erfinder: Reinecke, Frank, Dipl.-Ing., 30519 Hannover (DE)
(74) Vertreter: Junius, Walther, Dr.

(56) Entgegenhaltungen:
- DE-A- 4 227 137
- FR-A- 2 481 998
- US-A- 3 653 419
- US-A- 3 724 064
- US-A- 4 289 319
- US-A- 4 358 262
- DATABASE WPI Section Ch, Week 198843 Derwent Publications Ltd., London, GB; Class A31, AN 1988-305837 XP002133321 & SU 1 388 308 A (UKR PLASTIC MACHINE), 15. April 1988 (1988-04-15)

## Beschreibung

Die Erfindung betrifft Verfahren und Vorrichtungen zum Abdichten eines Ringspaltes zwischen zwei Dichtflächen von Maschinenteilen mit Hilfe eines Ringes, der an diesen beiden Dichtflächen anliegt, insbesondere an Extrusionsmaschinen, wo diese Abdichtung vorzugsweise bei Sieb- und Werkzeugwechselvorrichtungen ihre Bedeutung hat.

Im Inneren von Extrusionsmaschinen der Kautschuk und Kunststoff verarbeitenden Industrie steht das Extrudat unter hohen Drücken, insbesondere am Ende des Weges durch die Extrusionsmaschine, wo das Material aufgeschlossen und in einem fiießfähigen Zustand ist. An dieser Stelle wird im Weg des Extrudats häufig ein Sieb, auch Strainer genannt, angeordnet, um nicht aufschließbare Teile und Fremdkörper aus dem Strom des Extrudates zu entfernen, üblicherweise direkt hinter der Extrusionsvorrichtung, die ein Schnecken-, Kolben-, Zahnrad- oder anderer Extruder sein kann, bevor das Extrudat den am Ende der Extrusionsvorrichtung befindlichen Spritzkopf verläßt.

Die Siebe müssen von Zeit zu Zeit gereinigt werden. Um den Produktionsbetrieb für eine Reinigung nicht unterbrechen zu müssen, wurden Siebwechselvorrichtungen entwickelt, welche z.B. zwischen Extruder und Spritzkopf in die Extrusionsanlage eingebaut sind. Diese bestehen aus einzelnen Siebkassetten oder einem Schieber mit mindestens zwei Sieben und Mitteln für eine schnelle Verschiebung dieser Siebkassette oder dieses Schiebers in deren Arbeitspositionen. Wegen der hohen, am Ort des Siebes auftretenden Drücke bereitet es Probleme, im Betrieb mit hohen Anpreßdrücken im Bereich der Dichtung eine einwandfreie Abdichtung zu erzielen, die hohen Anpreßdrücke aber für die Verschiebung des Schiebers kurzzeitig soweit abzusenken, daß der Schieber oder die Siebkassetten ohne selbst beschädigt zu werden und ohne Beschädigung der verwendeten Dichtung verschoben werden kann, um sie nach der Verschiebung des Schiebers mit den Sieben bzw. der Siebkassetten sofort wieder wirksam werden zu lassen.

Ebenfalls um den Produktionsbetrieb nicht oder nur äußerst kurzzeitig zu unterbrechen, werden im Spritzkopfbereich ähnliche Geräte als Werkzeugwechsler eingesetzt. Diese entsprechen konstruktiv dem Siebwechsler, tragen aber im Schieber statt der Siebe die jeweilig benötigten Spritzwerkzeuge und ermöglichen so einen sehr schnellen Produktwechsel.

Die Technik hat eine Reihe von Möglichkeiten entwikkelt, die aber alle nicht voll befriedigen:

Bei der DE 30 43 217 C2 werden zwei ineinanderfassende Ringe hydraulich verschoben und gegen den Schieber gepreßt. Da hier ein aus zwei konzentrisch angeordneten Wellrohren bestehender Ringzylinder die hydraulische Verschiebung bewirkt, sind die erzielbaren Anpreßdrücke für viele Anwendungsfälle nicht ausreichend, da die Festigkeit der aus sehr dünnem Material gefertigten Wellrohre sehr begrenzt ist.

Bei der DE 19 19 269 erfolgt die Anpressung mittels eines Ringes, der von schräg auf ihn wirkenden Kolbenstangen kleiner hydraulischer Zylinder beaufschlagt wird. Die Abdichtung der zylindrischen inneren Umfangsfläche dieses Ringes und die auftretenden Querkräfte bereiten hier die Probleme.

Bei der DE 17 29 396 wird nicht auf ringförmiger Fläche, sondern nur an zwei gegenüberliegenden Stellen über Keilflächen auf das Dichtwerkzeug mit Preßdruck eingewirkt.

Bei der DE 196 15 679 A1 wird nicht mit hydraulischen Kräften, sondern durch Verdrehung eines mit Außengewinde versehenen Preßringes in einem Innengewinde eine mechanische Verschiebung erzielt. Hohe Anpreß- und damit Dichtungsdrücken lassen sich wegen auftretender hoher Reibungen und örtlich ungleicher Anpressung infolge von Gewindetoleranzen nicht erzielen. Auch die Rückstellung mit definiertem Restdruck ist kaum möglich.

Die Erfindung vermeidet die Nachteile des Standes der Technik. Es ist die Aufgabe der Erfindung, mit einfachen Mitteln eine sehr einfach aufgebaute kompakte Dichtung zu schaffen, die auch bei sehr hohen Drücken einwandfrei abdichtet und trotzdem leicht zu entlasten ist, wenn ein Maschinenteil gegen das andere verschoben werden soll.

Die Erfindung besteht darin, daß man entweder einen vorzugsweise im wesentlichen ebenen Ring aus einem elastischen, aber sehr festem Werkstoff verwendet, der vorzugsweise einseitig über seine Abdichtfläche hinaussteht, daß man diesen Ring durch Druck auf den einseitig über diese Abdichtfläche hinausstehenden Teil des Ringes so verformt, daß er sich wölbt und sich dabei mit seiner einen Randkante an die eine Dichtfläche ringlinienförmig anlegt und sich an der anderen Dichtfläche ringlinienförmig abstützt oder daß man einen gewölbten oder schwach kegelstumpfförmigen Ring aus einem elastischen, aber sehr festem Werkstoff verwendet, der zumindest einseitig über die Abdichtfläche hinaussteht, daß man diesen Ring unter Druck dichtend zwischen den beiden Dichtflächen liegen läßt und mit seiner einen Randkante an der einen Dichtfläche ringlinienförmig anliegen läßt und sich an der anderen Dichtfläche ringlinienförmig abstützen läßt, und daß man durch Krafteinleitung auf den über die Abdichtfläche hinausstehenden Teil des Ringes diesen Ring so verformt, daß er seine Wölbung verlierend sich streckt und dabei die linienförmige Anlage an der einen Dichtfläche verliert.

In beiden Fällen wird eine Abdichtung durch zwei ringlinienförmige Dichtflächen erzielt, bei denen die Flächenpressung und damit die Dichtwirkung sehr hoch ist. Im einen Fall wird der Ring verformt, um die Abdichtung zu erzielen, im anderen, zweiten Fall wird der Ring verformt, um die Dichtwirkung und ringlinienförmige Anpressung einseitig aufzuheben, um die Siebkassette oder den Schieber verschieben zu können.

Diese Abdichtung läßt sich überall dort anwenden, wo ein Spalt abzudichten ist, welcher geringfügig größer als die Dicke des abdichtenden Teiles des Ringes ist.

Die erfindungsgemäße Vorrichtung ist so gestaltet, daß der Ring im Bereich zwischen den beiden ringlinienförmigen Anlageflächen im Wesentlichen eben ist und durch Krafteinleitung auf den über die Abdichtfläche hinausstehenden Teil zu verwölben ist, so daß die beiden ringlinienförmigen Anlageflächen des Ringes mit Druck an den Dichtflächen anliegen.

Die zuvor erwähnten zwei Gestaltungsmöglichkeiten bestimmen auch die Vorrichtungen zum Abdichten eines Ringspaltes zwischen zwei ebenen Dichtflächen von Maschinenteilen, insbesondere an Extrusionsmaschinen:

In der einen Ausführungsform ist die erfindungsgemäße Vorrichtung so gestaltet, daß der Ring aus einem elastischen, aber sehr festem Werkstoff besteht, daß der Ring mindestens einseitig über seine Abdichtfläche hinaussteht, daß der Ring sich durch Krafteinwirkung auf den einen einseitig über seine Abdichtfläche hinausstehenden Teil so verformt, daß er sich wölbt, und daß der Ring mit seiner einen Randkante an der einen Dichtfläche ringlinienförmig anliegt und sich an der anderen Dichtfläche ringlinienförmig abstützt.

Die andere Gestaltungsmöglichkeit zeichnet sich dadurch aus, daß der Ring zumindest im Bereich zwischen den beiden ringlinienförmigen Anlageflächen gewölbt oder kegelstumpfartig geformt ist, daß die beiden ringlinienförmigen Anlageflächen mit Krafteinleitung an den Dichtflächen anliegen und durch Druck auf den über die Abdichtfläche hinausstehenden Teil des Ringes zumindest im Bereich zwischen den beiden ringlinienförmigen Anlageflächen in eine Ebene verformbar ist, wobei man durch Krafteinleitung auf den über die Abdichtfläche hinausstehenden Teil des Ringes diesen Ring so verformt, daß er seine Wölbung verlierend sich streckt und dabei die linienförmige Anlage an der einen Dichtfläche verliert.

Dabei ist es vorteilhaft, wenn der Ring aus Metall, einem hochfesten Kunststoff oder einem Metallverbundstoff gefertigt ist.

Der zur Krafteinleitung vorgesehene Teil des Ringes kann je nach Einsatzart nach außen oder nach innen über die Dichtfläche hinausstehen: Ist eine Fläche nach außen hin abzudichten, befindet sich der zur Krafteinleitung vorgesehene Teil des Ringes außen, ist eine Durchbrechung oder ein Loch abzudichten, befindet sich der zur Krafteinleitung vorgesehene Teil des Ringes innen in dem Loch.

Der Ring kann gleichmäßige Materialdicke aufweisen, vorteilhaft kann es jedoch sein, daß der Ring einen Teil gleichmäßiger Ringdicke und einen sich in seiner Dicke verjüngenden Teil aufweist, der sich bis zu dem einen Rand des Ringes erstreckt, und daß auf den sich verjüngenden Teil des Ringes eine Preßvorrichtung wirkt. Dies erfolgt, um bei ebener Anlagefläche genügend Freiraum für ein Niederpressen des Ringes in seinem über die Dichtfläche hinausragenden Teil zu gewinnen

Dabei ist es zweckmäßig, um nicht zu große Preßkräfte für die Verwölbung des Ringes zu benötigen, daß der sich verjüngende Teil des Ringes breiter als der Teil gleichmäßiger Ringdicke ist.

Es besteht aber auch die Möglichkeit, daß die Verjüngung durch eine Schrägfläche gebildet ist, wobei der Übergang der ebenen Fläche in die Schrägfläche die ringlinienförmige Dichtfläche bildet.

Möglich ist es, wenn die Verjüngung durch einen Absatz gebildet ist, der dann die eine ringlinienförmige Dichtfläche bildet, wobei vorzugsweise der verjüngte Teil des Ringes in den Absatz durch eine gekrümmte Fläche übergeht, um Spannungen im Ring nicht zu Rißbildungen führen zu lassen.

Ein besonderer Vorteil dieser Abdichtungsvorrichtung ist es, daß der Ring und damit die Dichtfläche beliebige Formen haben können, daß der Ring z.B. kreisförmig, oval, im wesentlichen rechteckig (mit Rundungen an den Ecken) oder im wesentlichen quadratisch (mit Rundungen an den Ecken) geformt ist.

Zu einer besonders einfachen Bauart führt es, wenn die Preßvorrichtung aus mehreren mit einer Preßkraft beaufschlagten Bolzen besteht. Die Bolzen können mit hydraulischer Kraft beaufschlagt sein und vorzugsweise die Kolben oder Kolbenstangen von Hydraulikzylindern sein.

Es besteht aber auch die Möglichkeit, daß die Bolzen mit mechanisch erzeugter Kraft, vorzugsweise der Kraft einer Spindel, eines Exzenters, eines Keils, eines Rundkeils oder einer Schraubmutter, beaufschlagt sind.

Eine gleichmäßige Beaufschlagung kann dadurch erzielt werden, daß die Bolzen an einem Ring befestigt sind, der mit hydraulischer oder mechanischer Kraft verschiebbar ist.

Dabei kann der Ring durch den Ringkolben einer hydraulischen Preßvorrichtung mit Preßkraft beaufschlagt werden.

Es besteht auch die Möglichkeit, daß der Ring durch einen mit mechanischen Kräften einer Spindel oder Schraubmutter verschobenen Ring gepreßt ist.

Um Verschleiß an den Dichtflächen zu verhindern ist es zweckmäßig, daß die ringlinienförmigen Anlageflächen des Ringes auf Verschleißringen aufliegen, die in den Dichtflächen befindlich sind.

Besonders vorteilhaft ist die Verwendung dieser Abdichtvorrichtung zur Abdichtung eines Siebes oder eines mit Sieben versehenen Schiebers einer Siebwechselvorrichtung einer Extrusionsanlage oder zur Abdichtung eines Ausformwerkzeuges oder eines mit Ausformwerkzeugen versehenen Schiebers einer Werkzeugwechselvorrichtung einer Extrusionsanlage.

Um den Dichtring verschiebungsfrei abstützen zu können, kann es zweckmäßig sein, daß der Ring an der nicht dichtenden Kante durch eine Klammer, einen Absatz, eine Ausnehmung oder einen Bund festgelegt ist.

Die Kraftbeaufschlagung des einseitig über die Dichtfläche hinausstehenden Teil des Ringes kann auch zu unerwünschten Verspannungen im Ring führen. Diese lassen sich durch Schlitze im einseitig über die Dichtfläche hinausstehenden Teil des Ringes, deren Richtung vorzugsweise radial weg von der Dichtfläche verläuft.

Das Wesen der Erfindung ist nachstehend anhand von in der Zeichnung schematisch dargestellten Ausführungsbeispielen näher erläutert. Diese Ausführungsbeispiele sind wenige Realisierungen der Erfindung, die sich in weiteren nicht dargestellten Ausführungsformen verwirklichen läßt. Es zeigen:
- Fig.1: einen Schnitt durch einen Strainer, im oberen Teil der Figur im angepreßten Zustand des abdichtenden Metallringes, im unteren Teil der Zeichnung im gelösten Zustand,

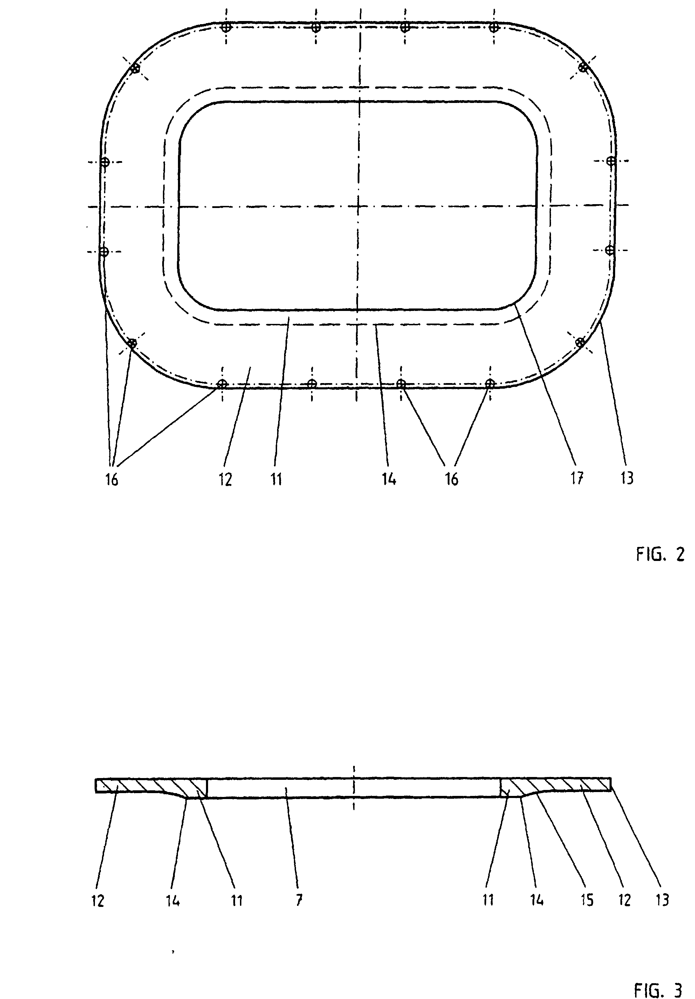

- Fig.2: eine Ansicht eines abdichtenden Metallringes mit Angabe der Preßpunkte,
- Fig.3: einen Schnitt durch den abdichtenden Metallring.
- Fig.4: eine Ansicht eines ebenen Dichtringes,
- Fig.5: einen Schnitt durch diesen Ring,
- Fig.6: diesen Ring im Einsatz zur Abdichtung eines Kanales,
- Fig.7: diesen Ring im Einsatz zur Abdichtung eines Durchbruchs,
- Fig.8: einen Schnitt durch einen weiteren Dichtring.
- Fig.9: einen Schnitt durch einen doppelkegelstumpfförmigen Dichtring
- Fig.10: einen Schnitt durch einen aus einem ebenen Mittelbereich und einem konischen, sich in seiner Materialdicke erweiternden äußeren Ringbereich gestalteten Dichtring.
- Fig.11: einen außerhalb der Dichtfläche an seinem Rand eingespannten Ring.
- Fig.12: einen mit Schlitzen versehenen Ring.

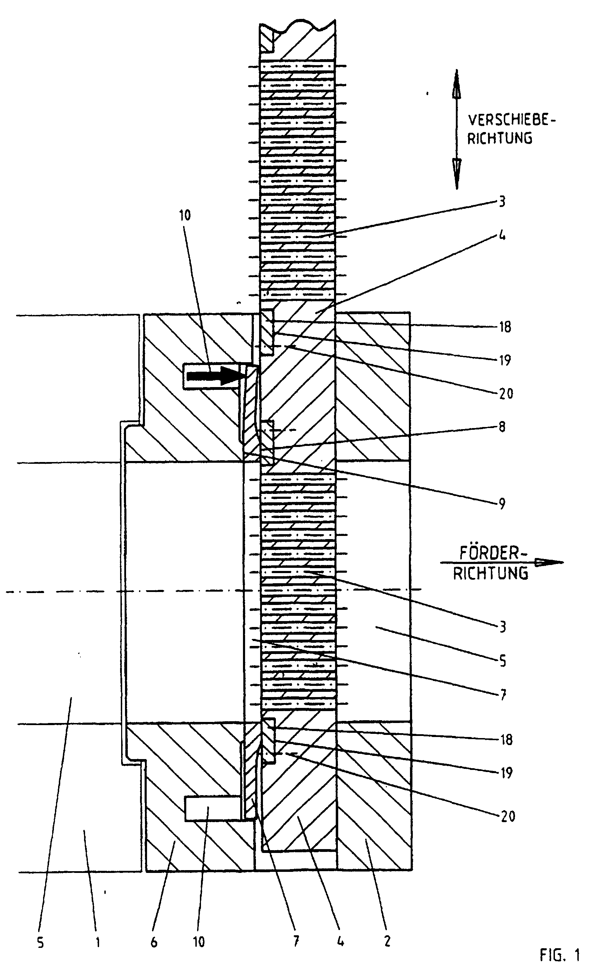

Die in Fig. 1 dargestellte Abdichtungsvorrichtung findet Verwendung an Extrusionsmaschinen, vornehmlich zur Abdichtung des Schiebers einer Siebwechselvorrichtung, kann aber auch an anderen Stellen Verwendung finden, z.B. bei Anschlüssen für einen Spritzkopfwechsler und anderen Anbauteilen.

Zwischen dem Extruder 1 und dem Gegenstück 2 ist ein Siebe 3 tragender Schieber 4 angeordnet. Diesen gilt es abzudichten, damit nicht Extrudat aus dem Förderweg 5 durch Spalte zwischen dem Schieber 4 und dem Gegenstück 2 einerseits und dem Schieber 4 und dem Extruder 1 bzw. einem am Extruder 1 angebrachten Bauteil 6 für die Aufnahme von Krafteinleitungswerkzeugen andererseits, radial austreten kann.

Die Abdichtungsvorrichtung besteht aus einem Ring 7, der zwischen zwei einander zugekehrten ebenen Flächen 8,9 der Maschinenteile Gegenstück 2 und Bauteil 6 angeordnet ist, und aus einer durch einen Pfeil dargestellten Krafteinleitungsvorrichtung 10, die in dem Bauteil 6 zwischen Extruder 1 und Schieber 4 oder in dem Extruder 1 selbst untergebracht ist.

Der Ring 7 ist aus Metall gefertigt. Er weist einen Teil 11 gleichmäßiger Ringdicke und einen sich in seiner Dicke verjüngenden Teil 12 auf, der sich bis zu dem einen (äußeren) Rand 13 des Ringes erstreckt. Der sich verjüngende Teil 12 des Ringes 7 ist breiter als der Teil 11 gleichmäßiger Ringdicke. Die Verjüngung ist durch einen Absatz 14 gebildet. Dabei geht der verjüngte Teil 12 des Ringes 7 in den Absatz 14 durch eine gekrümmte Fläche 15 über.

Die in dem Bauteil 6 untergebrachte Preßvorrichtung 10 besteht aus mehreren mit einer Preßkraft beaufschlagten Bolzen 16, die mit hydraulischer Kraft beaufschlagt sein können und vorzugsweise die Kolben oder Kolbenstangen von Hydraulikzylindern sind. Diese drücken den verjüngten Teil 12 des Ringes 7 nieder und verformen dabei den gesamten Ring 7 derart, daß der Absatz 14 linienförmig an dem Schieber 4 und die Innenkante 17 an dem Bauteil 6 bzw. an dem Extruder 1 anliegt und angepreßt ist. So entstehen zwei linienförmige Dichtzonen, die vom Extrudat nicht überwunden werden können.

Mit dem Anpressen des Ringes 7 an die beiden Dichtflächen 8,9 wird gleichzeitig der Schieber 4 an die Oberfläche des Gegenstückes 2 dichtend angepreßt.

Die Verjüngung des Ringes 7 ermöglicht dabei ein Niederpressen des verjüngten Randes des Ringes 7 bis in die Ebene der Oberfläche des nicht verjüngten Teiles 11 gleichmäßiger Ringdicke, wenn der Ring 7 auf einer Oberfläche eines Maschinenteiles aufliegt, die sich weit über den Ring hinaus erstreckt.

Da im Bereich dieser linienförmigen Dichtzonen sehr hohe Flächenpressungen auftreten, die auf Dauer zu bleibenden Verformungen führen können, ist es zweckmäßig, als Gegenlager gehärtete Metalleinsätze oder Hartmetalleinsätze 18 in hierfür vorgesehene Nuten 19 im Schieber 4 und gegebenenfalls auch im Bauteil 6 einzulegen und mit Schrauben 20 zu befestigen.

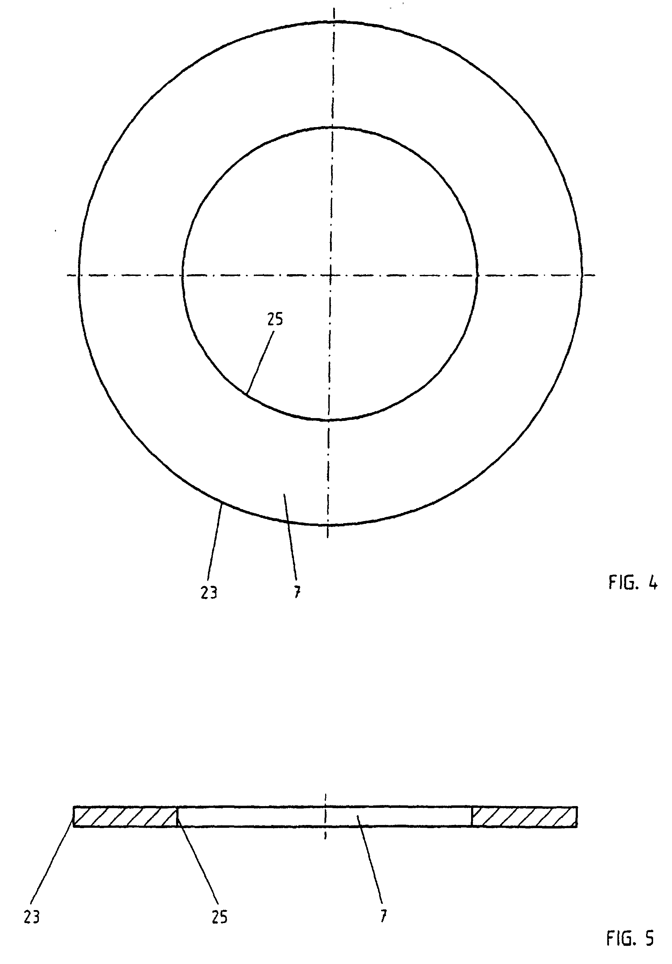

In Fig.4 ist eine Ansicht eines ebenen Dichtringes 7, in Fig.5 ein Schnitt durch diesen Ring 7 gezeigt. Dieser aus sehr festem, aber elastischem Metall gefertigte Dichtring 7 weist die einfachste Form eines Ringes auf: Er ist eben, sein Innen- und sein Außenrand sind kreisrund und völlig konzentrisch, seine Dicke ist an allen Orten dieselbe.

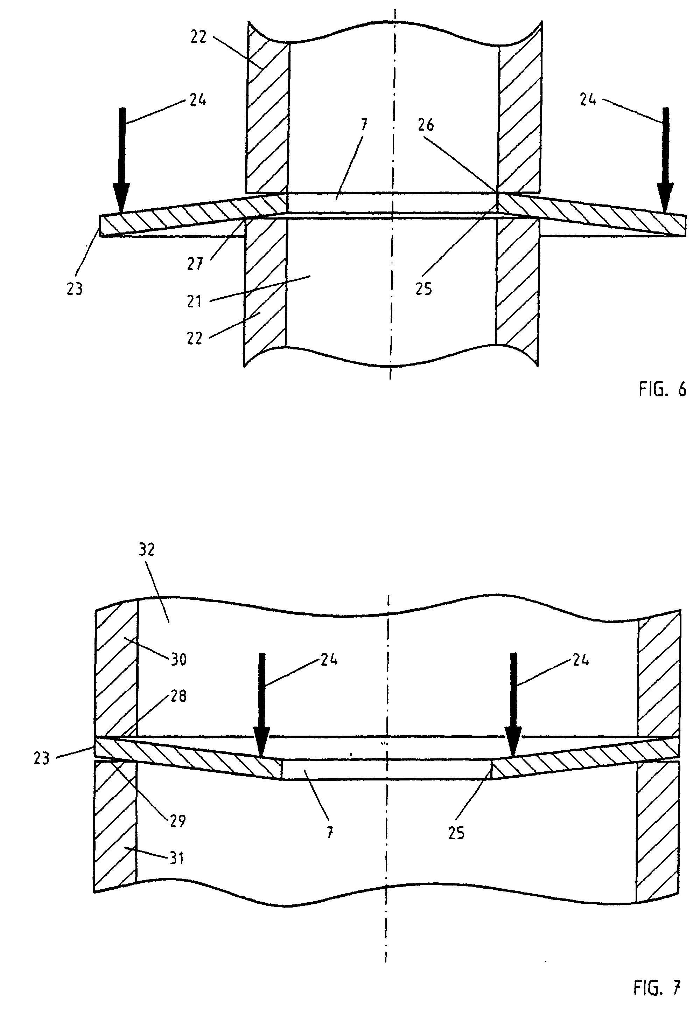

Fig.6 zeigt diesen Dichtring 7 im Einsatz zur Abdichtung eines Kanales 21, der durch zwei stirnseitig aufeinanderstoßende Rohre 22 gebildet ist. Der Innendurchmesser des Dichtringes 7 ist geringfügig größer als der Durchmesser des Kanales 21. Der Dichtring 7 steht mit seiner Außenkante 23 weit über die Rohre 22 radial hinaus. Auf diesen äußeren Teil des Dichtringes 7 ausgeübte Kräfte, angedeutet durch die Pfeile 24, verwölben den Dichtring 7 derart, daß seine Innenkante 25 an der Stirnseite des einen (oberen) Rohres 22 anliegt und hier auf einer ringlinienförmigen Fläche 26 abdichtet, während ein mittlerer Teil des Dichtringes 7 auf der äußeren Kante der Stirnseite des (unteren) Rohres 22 anliegt und hier auf einer ringlinienförmigen Fläche 27 abdichtet.

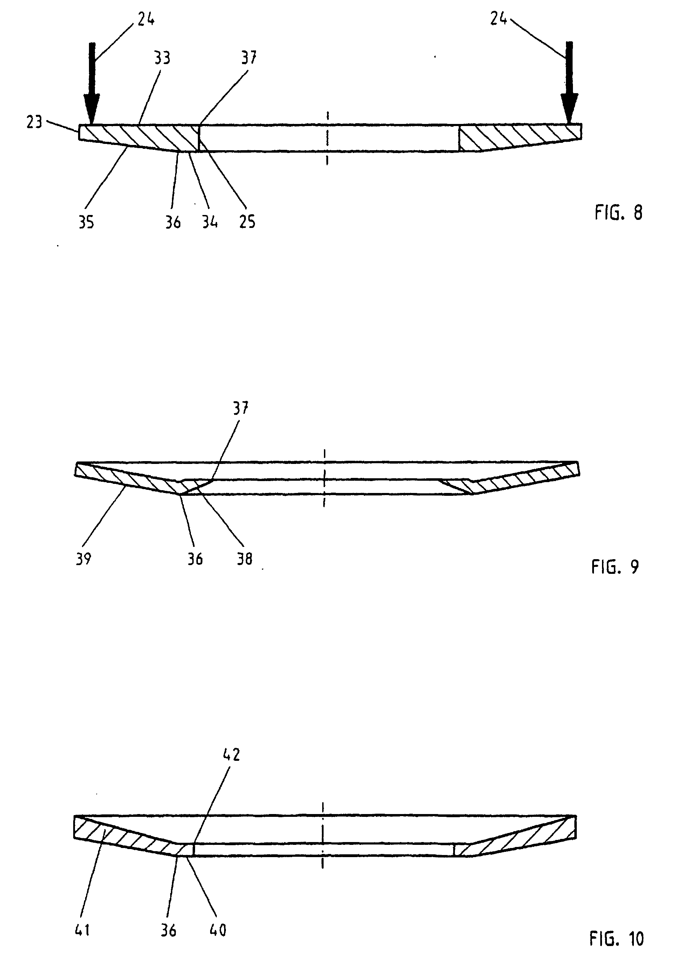

Fig.7 zeigt diesen selben Dichtring 7 im Einsatz zur Abdichtung eines Durchbruchs 32 bzw eines Loches, das die parallel in einem geringen Abstand voneinander stehenden Oberflächen 28,29 von Maschinenteilen 30,31 durchsetzt. Der Außendurchmesser 23 dieses Dichtringes 7 ist etwas größer als der Innendurchmesser des Durchbruchs 32, der Innendurchmesser des Dichtringes 7 hingegen erheblich kleiner als der Innendurchmesser des Durchbruchs 32. Auf den inneren Teil des Dichtringes 7 ausgeübte Kräfte 24 verwölben den Dichtring 7 derart, daß seine Außenkante an der Oberfläche 28 des (oberen) Maschinenteiles 30 anliegt und eine sehr schmale ringflächenförmige Abdichtung bildet, während ein mittlerer Teil an der Innenkante der Oberfläche 29 des (unteren) Maschinenteiles 31 anliegt und hier ebenfalls eine sehr schmale ringflächenförmige Abdichtung bildet.

Fig.8 zeigt einen Schnitt durch einen weiteren Dichtring 7. Dieser weist eine ebene Oberfläche 33 auf seiner einen Seite und eine aus einer schmalen ebenen Fläche 34 und einer unter einem stumpfen Winkel anschliessenden kegelförmigen Fläche 35 bestehende Oberfläche auf der anderen Seite auf. Auf dieser Seite ist somit ein Scheitel 36 gebildet, welcher im Betrieb die eine ringlinienförmige Dichtfläche bildet, während die andere ringlinienförmige Dichtfläche durch die Innenkante 37 der Oberfläche 33 auf der gegenüberliegenden Seite des Dichtringes 7 gebildet ist.

Die Verjüngung des Ringes 7 ermöglicht dabei ein Niederpressen des verjüngten Randes des Ringes 7 bis in die Ebene der Oberfläche des nicht verjüngten Teiles gleichmäßiger Ringdicke, wenn der Ring 7 auf einer ebenen Oberfläche eines Maschinenteiles aufliegt, die sich weit über den Ring hinaus erstreckt.

Fig.9 zeigt einen Schnitt durch einen doppelkegelstumpfförmigen Dichtring, der als Stanz- und Preßteil aus Metallblech gefertigt ist. Ein schmaler innerer konischer Teil 38 trifft im Scheitel 36 mit einem äußeren breiteren konischen Teil 39 zusammen. Der Scheitel 36 bildet die eine ringlinienförmige Dichtfläche, während die andere ringlinienförmige Dichtfläche durch die Innenkante 37 des Dichtringes 7 auf der gegenüberliegenden Seite des Dichtringes 7 gebildet ist.

Fig.10 zeigt einen Schnitt durch einen aus einem ebenen Mittelbereich 40 und einem konischen, sich in seiner Materialdicke erweiternden äußeren Ringbereich 41 gestalteten Dichtring 7. Auch hier bildet der Scheitel 36 die eine ringlinienförmige Dichtfläche, während die andere ringlinienförmige Dichtfläche durch die Innenkante 42 des Dichtringes 7 auf der gegenüberliegenden Seite des Dichtringes 7 gebildet ist.

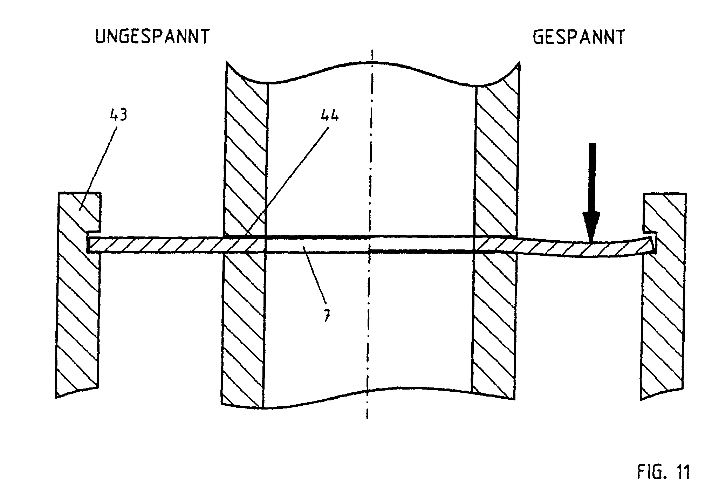

Fig.11 zeigt einen außen mittels einer Klammer 43 eingespannten Ring 7, der im Bereich zwischen der Dichtfläche 44 und der Klammer 43 mit Kraft beaufschlagt ist.

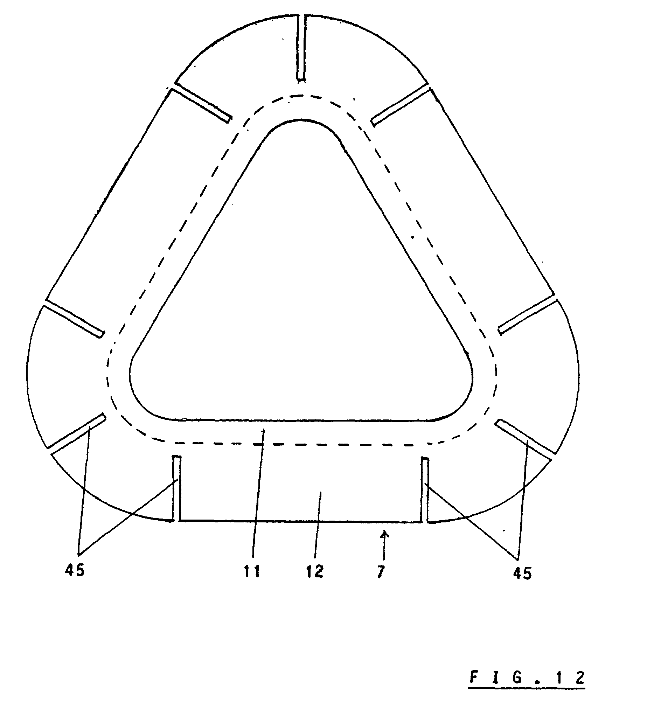

Die Kraftbeaufschlagung des einseitig über die Dichtfläche hinausstehenden Teil des Ringes kann auch zu unerwünschten Verspannungen im Ring führen. Diese lassen sich durch Schlitze im einseitig über die Dichtfläche hinausstehenden Teil des Ringes, deren Richtung vorzugsweise radial weg von der Dichtfläche verläuft. Die Fig.12 zeigt einen dreieckförmigen Ring mit solchen Schlitzen. Bei einem solchen Ring, der aus geradlinigen und gekümmten Flächen besteht und der im ungespannten bzw.unbelasteten Zusand eben ist, treten die unerwünschten Spannungen und Verformungen vorzugsweise in den gekrümmten Flächen und in den Übergängen von gekrümmten Flächen in gerade Flächen auf. Die Kraftbeaufschlagung hat bei solchen geschlitzten Ringen auf jeder Fläche zwischen zwei Schlitzen zu erfolgen.

### Liste der Bezugszeichen

- 1: Extruder
- 2: Spritzkopf
- 3: Sieb
- 4: Schieber
- 5: Förderweg
- 6: Bauteil
- 7: Ring
- 8: ebene Fläche
- 9: ebene Fläche
- 10: Preßvorrichtung
- 11: Teil gleichmäßiger Ringdicke
- 12: Teil sich verjüngender Ringdicke
- 13: äußerer R and des Ringes
- 14: Absatz
- 15: gekrümmte Fläche
- 16: Bolzen
- 17: Innenkante
- 18: Hartmetalleinsatz oder gehärteter Einsatz
- 19: Nut
- 20: Schraube
- 21: Kanal
- 22: Rohr
- 23: Außenkante
- 24: Kraft
- 25: Innenkante
- 26: ringlinienförmige Fläche
- 27: ringlinienförmige Fläche
- 28: Oberfläche
- 29: Oberfläche
- 30: Maschinenteil
- 31: Maschinenteil
- 32: Durchbruch
- 33: ebene Oberfläche
- 34: ebene Fläche
- 35: kegelförmige Fläche
- 36: Scheitel
- 37: Innenkante
- 38: innerer konischer Teil
- 39: äußerer konischer Teil
- 40: Mittelbereich
- 41: äußerer Ringbereich
- 42: Innenkante
- 43: Klammer
- 44: Dichtfläche
- 45: Schlitz

## Patentansprüche

1. Verfahren zum Abdichten eines Ringspaltes zwischen zwei Dichtflächen von Maschinenteilen, insbesondere an Extrusionsmaschinen, mit Hilfe eines Ringes, der an diesen beiden Dichtflächen anliegt,
**dadurch gekennzeichnet,**
**daß** man einen Ring aus einem elastischen, aber sehr festem Werkstoff verwendet, der über seine Abdichtfläche hinaussteht,
**daß** man diesen Ring durch Krafteinleitung in den über diese Abdichtfläche hinausstehenden Teil des Ringes so verformt, daß er sich wölbt und sich dabei mit seiner einen Randkante an die eine Dichtfläche ringlinienförmig anlegt und sich an der anderen Dichtfläche ringlinienförmig abstützt,
so daß es an dieser Stelle zur Abdichtung kommt.

2. Verfahren zum Abdichten eines Ringspaltes zwischen zwei Dichtflächen von Maschinenteilen, insbesondere an Extrusionsmaschinen, mit Hilfe eines Ringes, der an diesen beiden Dichtflächen anliegt,
**dadurch gekennzeichnet,**
**daß** man einen gewölbten oder schwach kegelstumpfförmigen Ring aus einem elastischen, aber sehr festem Werkstoff verwendet, der über die Abdichtfläche hinaussteht,
**daß** man diesen Ring unter Druck dichtend zwischen den beiden Dichtflächen verspannt liegen läßt und mit seiner einen Randkante an der einen Dichtfläche ringlini-enförmig anliegen läßt und sich an der anderen Dichtfläche ringlinienförmig abstützen läßt, so daß es zur Abdichtung kommt,
und **daß** man durch Krafteinleitung in den über die Abdichtfläche hinausstehenden Teil des Ringes diesen Ring so verformt, daß er seine Wölbung ganz oder teilweise verlierend sich streckt und dabei die linienförmige Anpressung an der einen Dichtfläche verliert.

3. Vorrichtung zum Abdichten eines Ringspaltes zwischen zwei ebenen Dichtflächen von Maschinenteilen, insbesondere an Extrusionsmaschinen,
mit Hilfe eines Ringes, der an diesen beiden Dichtflächen anliegt,
**dadurch gekennzeichnet,**
**daß** der Ring (7) aus einem elastischen, aber sehr festem Werkstoff besteht,
**daß** der Ring (7) über seine Abdichtfläche hinaussteht,
**daß** der Ring (7) sich durch Kraftbeaufschlagung des einen über seine Abdichtfläche hinausstehenden Teil (12) so verformt, daß er sich wölbt oder aus einem gewölbten Zustand streckt (zurückwölbt),
und **daß** der Ring (7) im gewölbten Zustand an jeder der beiden Dichtflächen (8,9) ringlinienförmig anliegt.

4. Vorrichtung nach Anspruch 3,
**dadurch gekennzeichnet,**
**daß** der Ring (7) lediglich einseitig über die Dichtfläche hinaussteht,
und **daß** der Ring (7) mit seiner einen Randkante (17) an der einen Dichtfläche (9) ringlinienförmig anliegt und sich an der anderen Dichtfläche (8) ringlinienförmig abstützt.

5. Vorrichtung nach Anspruch 3,
**dadurch gekennzeichnet,**
**daß** der Ring (7) im spannungslosen Zustand ein ebener Ring ist, der sich durch Kraftbeaufschlagung auf seinen über die Dichtfläche hinausstehenden Rand wölbt.

6. Vorrichtung nach Anspruch 3,
**dadurch gekennzeichnet,**
**daß** der Ring (7) im spannungslosen Zustand ein gewölbter Ring ist, der sich durch Kraftbeaufschlagung auf seinen über die Dichtfläche hinausstehenden Rand streckt (zurückwölbt).

7. Vorrichtung nach Anspruch 3,
**dadurch gekennzeichnet,**
**daß** der Ring (7) im Bereich zwischen den beiden ringlinienförmigen Anlageflächen (8,9) im wesentlichen eben ist und durch Druck auf den über die Abdichtfläche hinausstehenden Teil (12) zu verwölben ist,
so daß die beiden ringlinienförmigen Anlageflächen (26,27) des Ringes (7) mit Druck an den Dichtflächen anliegen.

8. Vorrichtung nach Anspruch 3,
**dadurch gekennzeichnet,**
**daß** der Ring (7) zumindest im Bereich zwischen den beiden ringlinienförmigen Anlageflächen gewölbt oder kegelstumpfartig geformt ist,
**daß** die beiden ringlinienförmigen Anlageflächen mit Druck an den Dichtflächen anliegen
und durch Krafteinleitung in den über die Abdichtfläche hinausstehenden Teil des Ringes (7) dieser Ring (7) seiner Wölbung entgegengesetzt verformt wird und so seine linienförmige Anblage an der einen Dichtfläche verliert.

9. Vorrichtung nach Anspruch 3,
**dadurch gekennzeichnet,**
**daß** der Ring (7) aus Metall, einem hochfesten Kunststoff oder einem Metallverbundstoff gefertigt ist.

10. Vorrichtung nach Anspruch 3,
**dadurch gekennzeichnet,**
**daß** der Ring (7) einen Teil (11) gleichmäßiger Ringstärke und einen sich in seiner Stärke verjüngenden Teil (12) aufweist, der sich bis zu dem einen Rand (13) des Ringes (7) erstreckt,
und **daß** auf den sich verjüngenden Teil (12) des Ringes (7) eine Preßvorrichtung (10) zur Kraftbeaufschlagung des Ringes (7) wirkt.

11. Abdichtungsvorrichtung nach Anspruch 10,
**dadurch gekennzeichnet,**
**daß** der sich verjüngende Teil (12) des Ringes (7) breiter als der Teil (11) gleichmäßiger Ringstärke ist.

12. Abdichtungsvorrichtung nach Anspruch 10,
**dadurch gekennzeichnet,**
**daß** die Verjüngung durch einen Absatz (14) gebildet ist,
wobei vorzugsweise der verjüngte Teil (12) des Ringes (7) in den Absatz (14) durch eine gekrümmte Fläche (15) übergeht.

13. Abdichtungsvorrichtung nach Anspruch 10,
**dadurch gekennzeichnet,**
**daß** die Verjüngung durch eine Schrägfläche oder konische Fläche (35) gebildet ist.

14. Abdichtungsvorrichtung nach Anspruch 3,
**dadurch gekennzeichnet,**
**daß** der Ring (7) beliebig, vorzugsweise kreisförmig oder im Wesentlichen oval, rechteckig (mit Abrundungen in den Ecken) oder quadratisch (mit Abrundungen in den Ecken) geformt ist.

15. Abdichtungsvorrichtung nach Anspruch 3,
**dadurch gekennzeichnet,**
**daß** die Preßvorrichtung (10) zur Kraftbeaufschlagung des Ringes (7) aus mehreren mit einer Preßkraft beaufschlagten Bolzen (16) besteht.

16. Abdichtungsvorrichtung nach Anspruch 15,
**dadurch gekennzeichnet,**
**daß** die Bolzen (16) mit hydraulischer Kraft beaufschlagt sind und vorzugsweise die Kolben oder Kolbenstangen von Hydraulikzylindern sind.

17. Abdichtungsvorrichtung nach Anspruch 15,
**dadurch gekennzeichnet,**
**daß** die Bolzen (16) mit mechanisch erzeugter Kraft, vorzugsweise der Kraft einer Spindel, eines Exzenters, eines Keils, eines rundkeils oder einer Schraubmutter, beaufschlagt sind.

18. Abdichtungsvorrichtung nach Anspruch 15,
**dadurch gekennzeichnet,**
**daß** die Bolzen (16) an einem Ring befestigt sind, der mit hydraulischer oder mechanischer Kraft verschiebbar ist.

19. Abdichtungsvorrichtung nach Anspruch 3,
**dadurch gekennzeichnet,**
**daß** der Ring (7) durch den Ringkolben einer hydraulischen Preßvorrichtung mit Preßkraft beaufschlagt ist.

20. Abdichtungsvorrichtung nach Anspruch 3,
**dadurch gekennzeichnet,**
**daß** der Ring (7) durch einen mit mechanischen Kräften einer Spindel oder Schraubmutter verschobenen Ring gepreßt ist.

21. Abdichtungsvorrichtung nach Anspruch 3,
**dadurch gekennzeichnet,**
**daß** die ringlinienförmigen Anlageflächen des Ringes (7) auf Verschleißringen (18) aufliegen, die an den Dichtflächen befindlich sind.

22. Abdichtungsvorrichtung nach Anspruch 3,
**dadurch gekennzeichnet,**
**daß** der Ring (7) aus zwei einen Scheitel (36) zwischen sich einschließenden Teilen (38,39;40,41) gebildet ist, die vorzugsweise konisch oder ballig gestaltet sind, und vorzugsweise eine einheitliche Materialstärke aufweist.

23. Abdichtungsvorrichtung nach Anspruch 3,
**dadurch gekennzeichnet,**
**daß** der Ring (7) an seinem nicht dichtenden Rand durch ein Maschinenteil, vorzugsweise durch eine Klammer (43), einen Absatz, eine Ausnehmung oder einen Bund, festgelegt ist.

24. Verwendung des Ringes nach Anspruch 3 zur Abdichtung eines verschiebbaren Maschinenteiles, insbesondere einer Profil- oder Strainerplatte, eines Siebes oder eines mit Sieben versehenen Schiebers einer Siebwechselvorrichtung einer Extrusionsanlage.

25. Verwendung des Ringes nach Anspruch 3 zur Abdichtung eines Ausformwerkzeuges oder eines mit Ausformwerkzeugen versehenen Schiebers einer werkzeugwechselvorrichtung einer Extrusionsanlage.

26. Vorrichtung nach Anspruch 3,
**gekennzeichnet durch**
Schlitze (45) im einseitig über die Dichtfläche hinausstehenden Teil des Ringes (7),
deren Richtung vorzugsweise radial weg von der Dichtfläche verläuft.

## Claims

1. Method for sealing an annular gap between two sealing faces of machine parts, in particular on extrusion machines, with the aid of a ring which bears on these two sealing faces, **characterised in that** use is made of a ring of an elastic but very strong material which protrudes beyond its sealing face, **in that** this ring is deformed through application of force to the part of the ring protruding beyond this sealing face so that it arches and in the process bears with one of its rim edges on one sealing face with the shape of an annular line and is supported on the other sealing face with the shape of an annular line so that sealing occurs in this location.

2. Method for sealing an annular gap between two sealing faces of machine parts, in particular on extrusion machines, with the aid of a ring which bears on these two sealing faces, **characterised in that** use is made of an arched or slightly truncated cone-shaped ring of an elastic but very strong material which protrudes beyond the sealing face, **in that** this ring is made to lie clamped sealingly under pressure between the two sealing faces and is made to bear with one of its rim edges on one sealing face with the shape of an annular line and is supported on the other sealing face with the shape of an annular line so that sealing occurs, and **in that** this ring is deformed through application of force to the part of the ring protruding beyond the sealing face so that it stretches losing its arching wholly or partly and in the process loses the line-shaped contact on the first sealing face.

3. Device for sealing an annular gap between two flat sealing faces of machine parts, in particular on extrusion machines, with the aid of a ring which bears on these two sealing faces, **characterised in that** the ring (7) is made of an elastic but very strong material, **in that** the ring (7) protrudes beyond its sealing face, **in that** the ring (7) is deformed through application of force to a part (12) protruding beyond its sealing face so that it arches or stretches out of an arched state (arches back), and **in that** in the arched state the ring (7) bears on each of the two sealing faces (8, 9) with the shape of an annular line.

4. Device according to claim 3, **characterised in that** the ring (7) only protrudes beyond the sealing face on one side, and **in that** the ring (7) bears with its first rim edge (17) on the first sealing face (9) with the shape of an annular line and is supported on the other sealing face (8) with the shape of an annular line.

5. Device according to claim 3, **characterised in that** in the unstressed state the ring (7) is a flat ring which arches through application of force to its rim protruding beyond the sealing face.

6. Device according to claim 3, **characterised in that** in the unstressed state the ring (7) is an arched ring which stretches (arches back) through application of force to its rim protruding beyond the sealing face.

7. Device according to claim 3, **characterised in that** the ring (7) is essentially flat in the area between the two annular line-shaped contact faces (8, 9) and can be made to arch through pressure on the part (12) protruding beyond the sealing face so that the two annular line-shaped contact faces (26, 27) of the ring (7) bear on the sealing faces with pressure.

8. Device according to claim 3, **characterised in that** the ring (7) is arched or truncated cone-shaped at least in the area between the two annular line-shaped contact faces, **in that** the two annular line-shaped contact faces bear on the sealing faces with pressure, and the ring (7) is deformed in the opposite direction to its arching through application of force to the part of the ring (7) protruding beyond the sealing face and so loses its line-shaped contact on one sealing face.

9. Device according to claim 3, **characterised in that** the ring (7) is made of metal, a high strength plastic or a metal composite material.

10. Device according to claim 3, **characterised in that** the ring (7) exhibits a part (11) of uniform ring thickness and a part (12) which tapers in its thickness and extends to one rim (13) of the ring (7), and **in that** a pressing device (10) for application of force to the ring (7) acts on the tapering part (12) of the ring (7).

11. Sealing device according to claim 10, **characterised in that** the tapering part (12) of the ring (7) is broader than the part (11) of uniform ring thickness.

12. Sealing device according to claim 10, **characterised in that** the taper is formed by a shoulder (14) and preferably the tapered part (12) of the ring (7) passes into the shoulder (14) through a curved face (15).

13. Sealing device according to claim 10, **characterised in that** the taper is formed by an oblique face or conical face (35).

14. Sealing device according to claim 3, **characterised in that** the ring (7) is any shape, preferably circular or essentially oval, rectangular (with roundings in the corners) or square (with roundings in the corners).

15. Sealing device according to claim 3, **characterised in that** the pressing device (10) for application of force to the ring (7) consists of a plurality of pins (16) subjected to a pressing force.

16. Sealing device according to claim 15, **characterised in that** the pins (16) are subjected to hydraulic force and preferably are the pistons or piston rods of hydraulic cylinders.

17. Sealing device according to claim 15, **characterised in that** the pins (16) are subjected to mechanically produced force, preferably the force of a spindle, an eccentric, a wedge, a round wedge or a threaded nut.

18. Sealing device according to claim 15, **characterised in that** the pins (16) are fastened to a ring which is displaceable with hydraulic or mechanical force.

19. Sealing device according to claim 3, **characterised in that** the ring (7) is subjected to pressure force through the annular piston of a hydraulic pressing device.

20. Sealing device according to claim 3, **characterised in that** the ring (7) is pressed by a ring displaced with mechanical forces of a spindle or threaded nut.

21. Sealing device according to claim 3, **characterised in that** the annular line-shaped contact faces of the ring (7) lie on wearing rings (18) which are located on the sealing faces.

22. Sealing device according to claim 3, **characterised in that** the ring (7) is formed of two parts (38, 39; 40, 41) which enclose between them a vertex (36) and are preferably conical or round in shape, and preferably exhibit a uniform material thickness.

23. Sealing device according to claim 3, **characterised in that** on its non-sealing rim the ring (7) is fixed by a machine part, preferably by a clip (43), a shoulder, a recess or a collar.

24. Use of the ring according to claim 3 for sealing a displaceable machine part, in particular a profile or strainer plate, a sieve or a slider provided with sieves of a sieve changing device of an extrusion installation.

25. Use of the ring according to claim 3 for sealing a mould release tool or a slider provided with mould release tools of a tool changing device of an extrusion installation.

26. Device according to claim 3, **characterised by** slits (45) in the part of the ring (7) protruding beyond the sealing face on one side, the direction of which preferably runs radially away from the sealing face.

## Revendications

1. Procédé pour obturer à joint étanche une fente annulaire entre deux surfaces d'étanchéité de parties de machine, en particulier sur des machines d'extrusion, à l'aide d'une bague qui est en appui contre ces deux surfaces d'étanchéité,
**caractérisé**
**en ce qu'**on utilise une bague faite d'une matière élastique mais très solide qui déborde au-delà de ses surfaces d'étanchéité,
**en ce qu'**on déforme cette bague par application d'une force dans la partie de la bague qui déborde au-delà de ces surfaces d'étanchéité de manière qu'elle se bombe et applique alors contre l'une des surfaces d'étanchéité par l'un de ses bords marginaux selon une ligne annulaire et s'appuie contre l'autre surface d'étanchéité selon une ligne annulaire de sorte qu'il se forme un joint étanche à cet endroit.

2. Procédé pour obturer à joint étanche une fente annulaire entre deux surfaces d'étanchéité de parties de machines, en particulier sur des machines d'extrusion, à l'aide d'une bague qui est en appui contre ces deux surfaces d'étanchéité,
**caractérisé**
**en ce qu'**on utilise une bague bombée ou légèrement tronconique faite d'une matière élastique mais très solide qui déborde au-delà des surfaces d'étanchéité,
**en ce qu'**on fait en sorte que cette bague soit placée avec précontrainte sous pression à joint étanche entre les dcux surfaces d'étanchéité et soil appliquée par l'un de ses bords marginaux contre l'une des surfaces d'étanchéité selon une ligne annulaire et s'appuie contre l'autre surface d'étanchéité selon une ligne annulaire, de sorte qu'il s'établit un joint étanche,
et **en ce que**, par application d'une force dans la partie de la bague qui déborde au-delà de la surface d'étanchéité, on déforme cette bague de telle manière qu'elle se redresse en perdant totalement ou partiellement sa forme bombée et qu'elle perde ainsi l'appui linéaire contre la première surface d'étanchéité.

3. Dispositif pour obturer à joint étanche une fente annulaire entre deux surfaces d'étanchéité planes de pièces de machines, en particulier sur des machines d'extrusion, à l'aide d'une bague qui est en appui au niveau de ces deux surfaces d'étanchéité,
**caractérisé**
**en ce que** la bague (7) est faite d'une matière élastique mais très solide,
**en ce que** la bague (7) déborde au-delà de sa surface d'étanchéité,
**en ce que** la bague (7) se déforme, sous l'action d'une application de force sur la partie (12) qui déborde au-delà de sa surface d'étanchéité de telle manière qu'elle se bombe ou qu'elle se redresse en partant de son état bombé (qu'elle revienne à partir de l'état bombé),
et **en ce que**, dans l'état bombé, la bague (7) est appuyée contre chacune des deux surfaces d'étanchéité (8, 9) selon une ligne annulaire.

4. Dispositif selon la revendication 3,
**caractérisé**
**en ce que** la bague (7) ne déborde au-delà de la surface d'étanchéité que d'un seul côté,
et **en ce que** la bague (7) est en appui contre la première surface d'étanchéité (9) par l'un de ses bords marginaux (17) selon une ligne annulaire, et s'appuie contre l'autre surface d'étanchéité (8) selon une ligne annulaire.

5. Dispositif selon la revendication 3,
**caractérisé**
**en ce qu'**à l'état détendu, la bague (7) est une bague plane qui se bombe sous l'action d'une application de force sur son bord qui déborde au-delà de la surface d'étanchéité.

6. Procédé selon la revendication 3,
**caractérisé**
**en ce qu'**à l'état détendu, la bague (7) est une bague bombée qui se redresse (revient à partir de l'état bombé) sous l'action d'une application de force sur son bord qui déborde au-delà de la surface d'étanchéité.

7. , Dispositif selon la revendication 3,
**caractérisé**
**en ce que**, dans la région entre les deux surfaces d'appui en forme de ligne annulaire (8, 9), la bague est essentiellement plane et qu'elle peut être bombée par une pression sur la partie (12) qui déborde au-delà de la surface d'étanchéité,
de sorte que les deux surfaces d'appui en forme de ligne annulaire (26, 27) de la bague (7) sont en appui sous pression contre les surfaces d'étanchéité.

8. Dispositif selon la revendication 3,
**caractérisé**
**en ce que** la bague (7) est mise à une forme bombée ou tronconique au moins dans la région comprise entre les deux surfaces d'appui en forme de ligne annulaire,
**en ce que** les deux surfaces d'appui en forme de ligne annulaire s'appuient sous pression contre les surfaces d'étanchéité,
et, sous l'effet d'une application de force dans la partie de la bague (7) qui déborde au-delà de la surface d'étanchéité, cette bague (7) se déforme en sens inverse de son bombé et, ainsi, perd son appui linéaire contre l'une des surfaces d'étanchéité.

9. Dispositif selon la revendication 3,
**caractérisé**
**en ce que** la bague (7) est fabriquée en métal, en une matière plastique à haute résistance ou en un composite métallique.

10. Dispositif selon la revendication 3,
**caractérisé**
**en ce que** la bague (7) présente une partie (11) d'épaisseur uniforme et une partie (12) qui s'amincit en épaisseur, et qui s'étend jusqu'à un bord (13) de la bague (7)
et **en ce que**, sur la partie (12) de la bague (7) qui s'amincit, agit un dispositif de pression (10) servant à soumettre la bague (7) à une sollicitation de force.

11. Dispositif d'étanchéité selon la revendication 10,
**caractérisé**
**en ce que** la partie (12) de la bague (7) qui s'amincit est plus large que la partie (11) d'épaisseur uniforme.

12. Dispositif d'étanchéité selon la revendication 10,
**caractérisé**
**en ce que** l'amincissement est formé par un épaulement (14),
la partie amincie (12) de la bague (7) se raccordant de préférence à l'épaulement (14) par la surface incurvée (15).

13. Dispositif d'étanchéité scion la revendication 10,
**caractérisé**
**en ce que** l'amincissement est formé par une surface oblique ou une surface conique (35).

14. Dispositif d'étanchéité selon la revendication 3,
**caractérisé**
**en ce que** la bague (7) est d'une forme quelconque, de préférence circulaire ou sensiblement ovale, rectangulaire (avec des arrondis dans les angles) ou carrée (avec des arrondis dans les angles).

15. Dispositif d'étanchéité selon la revendication 3,
**caractérisé**
**en ce que** le dispositif de pression (10) destiné à soumettre la bague (7) à une sollicitation de force est composé de plusieurs tiges (16) sollicitées par une force de pression.

16. Dispositif d'étanchéité selon la revendication 15,
**caractérisé**
**en ce que** les tiges (16) sont sollicitées par une force hydraulique et sont de préférence les pistons où les tiges de pistons de vérins hydrauliques.

17. Dispositif d'étanchéité selon la revendication 15,
**caractérisé**
**en ce que** les tiges (16) sont sollicitées par une force produite mécaniquement, de préférence la force d'une vis, d'un excentrique, d'un coin, d'une clavette ronde ou d'un écrou.

18. Dispositif d'étanchéité selon la revendication 15,
**caractérisé**
**en ce que** les tiges (16) sont fixées à une bague qui peut être déplacée en translation au moyen d'une force hydraulique ou mécanique.

19. Dispositif d'étanchéité selon la revendication 3,
**caractérisé**
**en ce que** la bague (7) est sollicitée avec une force de pression par le piston annulaire d'un dispositif de pression hydraulique.

20. Dispositif d'étanchéité selon la revendication 3.
**caractérisé**
**en ce que** la bague (7) est pressée par une bague qui est elle-même déplacée en translation au moyen des forces mécaniques d'une vis ou d'un écrou.

21. Dispositif d'étanchéité selon la revendication 3,
**caractérisé**
**en ce que** les surfaces d'appui en forme de ligne annulaire de la bague (7) sont en appui sur des bagues d'usure (18) qui se trouvent au niveau des surfaces d'étanchéité.

22. Dispositif d'étanchéité selon la revendication 3,
**caractérisé**
**en ce que** la bague (7) est formée de deux parties (38, 39 ; 40, 41) formant entre elles une arête (36), qui sont de préférence coniques ou bombées, et elle présente de préférence une épaisseur de matière uniforme.

23. Dispositif d'étanchéité selon la revendication 3,
**caractérisé**
**en ce que**, le long de son bord qui ne forme pas joint étanche, la bague (7) est immobilisée par une pièce de machine, de préférence par une agrafe (43), un épaulement, un évidement ou une embase.

24. Utilisation de la bague selon la revendication 3 pour former joint étanche sur une pièce de machine mobile en translation, en particulier une plaque de profil ou de filtre, un tamis ou un coulisseau muni de tamis appartenant à un dispositif de changement de tamis, d'une installation d'extrusion.

25. Utilisation de la bague selon la revendication 3, pour former un joint étanche sur un outil de démoulage ou d'un coulisseau muni d'outils de démoulage appartenant à un dispositif de changement d'outil d'une installation d'extrusion.

26. Dispositif selon la revendication 3,
**caractérisé par**
des fentes (45) prévues dans la partie de la bague (7) qui déborde au-delà de la surface d'étanchéité sur un côté, dont la direction s'étend de préférence radialement en s'éloignant de la surface d'étanchéité,
